# EUROPÄISCHE PATENTSCHRIFT

(11) **EP 0 857 980 B1**
(45) Veröffentlichungstag und Bekanntmachung des Hinweises auf die Patenterteilung: **31.10.2001**
(21) Anmeldenummer: 97121656.9
(22) Anmeldetag: 09.12.1997
(51) Int. Cl.: G01S 7/481, G01S 17/10, G02B 26/02

(54) **Entfernungsmesser**
Range finder
Télémètre

(30) Priorität: 05.02.1997 DE 19704340
(43) Veröffentlichungstag der Anmeldung: 12.08.1998
(73) Patentinhaber: SICK AG, 79183 Waldkirch (DE)
(72) Erfinder: Wetteborn, Hainer, 79183 Waldkirch (DE)
(74) Vertreter: Finsterwald, Manfred, Dipl.-Ing., Dipl.-Wirtsch.-Ing.

(56) Entgegenhaltungen:
- DD-A- 238 459
- US-A- 4 498 764
- US-A- 4 521 107
- US-A- 5 054 911
- R. SCHWARTE: "Performance capabilities of laser ranging sensors" PROCEEDINGS OF ESA WORKSHOP ON SPLAT, 25. - 30.März 1984, LES DIABLERETS, CH, Seiten 61-66, XP000041253

## Beschreibung

Die Erfindung betrifft einen Entfernungsmesser, insbesondere einen einstrahligen Pulslaser-Entfernungsmesser mit einem Lichtsender, einem Lichtempfänger, einem im Sende- oder Empfangszweig gelegenen optischen Abschwächer und einer Zeitmeßeinheit zur Ermittlung der Lichtlaufzeit zwischen Aussendung und Empfang eines Lichtsignals.

Bekannte Entfernungsmesser der angegebenen Art sind oftmals nur mit großem wirtschaftlichen Aufwand herstellbar. Insbesondere arbeiten die bekannten Entfernungsmesser nicht immer mit der in vielen Anwendungsfällen wünschenswerten Genauigkeit.

Ein Beispiel für solch ein Gerät ist der in US 4 521 107 A beschriebene Entfernungsmesser mit den Merkmalen des Oberbegriffes des Anspruches 1. Eine Aufgabe der Erfindung besteht darin, einen Entfernungsmesser der eingangs angegebenen Art derart weiterzubilden, daß die Herstellungskosten gesenkt werden können und daß insbesondere auch dessen Meßgenauigkeit und dessen exakte Reproduzierbarkeit bei der Herstellung erhöht werden kann.

Diese Aufgabe wird erfindungsgemäß dadurch gelöst, daß der Lichtsender als einheitlicher und kompakter Baustein ausgebildet ist, in welchen eine Laserdiode, Anschlußelemente für die Laserdiode, eine Vorrichtung zur Referenzimpulsauskopplung sowie ein Fasersteckanschluß zur Einkopplung des ausgesandten Lichts in eine Glasfaser integriert sind, und daß der Lichtempfänger ebenfalls als einheitlicher und kompakter Baustein ausgebildet ist, in welchen eine Photodiode, Anschlußelemente für die Photodiode, eine Vorrichtung zur Referenzimpulseinkopplung sowie ein Fasersteckanschluß zur über eine Glasfaser erfolgenden Einkopplung von Empfangslicht integriert sind.

Der erfindungsgemäße Entfernungsmesser zeichnet sich also dadurch aus, daß alle für die Erzeugung des Sendelichts, die Auskopplung eines Referenzimpulses sowie die Einkopplung des Sendelichts in eine Glasfaser benötigten Komponenten zu einem einzelnen, kompakten Baustein zusammengefaßt sind. Ebenso sind die Komponenten für die Einkopplung von Empfangslicht, die Einkopplung des Referenzimpulses sowie die Umwandlung der eingekoppelten Lichtsignale in elektrische Signale zu einem einheitlichen und kompakten Empfangsbaustein zusammengefaßt.

Der Einsatz dieser beiden Bausteine führt auf vorteilhafte Weise zu einer einfachen Handhabbarkeit und damit auch zu einer schnelleren Montage, wobei sich gleichzeitig die Baugröße des Entfernungsmessers verringern läßt. Zudem werden bei der Montage des Entfernungsmessers aufwendige Justagearbeiten eingespart, da die optischen Komponenten von Sende- und Empfangsbaustein bereits innerhalb dieser Bausteine fest zueinander justiert sind, so daß bei der Montage des Entfernungsmessers diesbezüglich keine weiteren Arbeiten mehr nötig sind.

Da erfindungsgemäß sowohl der Lichtsender als auch der Lichtempfänger jeweils mit einem Fasersteckanschluß ausgestattet sind, läßt sich die Optik des Entfernungsmessers ohne Schwierigkeiten von dessen Elektronik trennen. Die Verbindung zwischen Optik und Elektronik kann auf einfache Weise mittels Lichtleitfasern hergestellt werden, die mit den genannten Fasersteckanschlüssen koppelbar sind. Diese Separierung von optischen und elektronischen Komponenten ist insbesondere dann von Vorteil, wenn der erfindungsgemäße Entfernungsmesser beispielsweise in explosionsgefährdeten Bereichen eingesetzt wird, in denen das Vorhandensein von elektronsichen Bauteilen problematisch ist. In solchen Anwendungsfällen kann die Optik in explosionsgefährdeten Bereichen und die Elektronik außerhalb dieser Bereiche angeordnet werden.

In einer bevorzugten Ausführungsform der Erfindung ist es auch möglich, den Sende- und den Empfangsbaustein zu einem einzigen Baustein zusammenzufassen. In diesem Fall ist es auf vorteilhafte Weise nicht mehr nötig, die beiden Bausteine so zueinander justieren, daß der aus dem Sendebaustein ausgekoppelte Referenzimpuls korrekt in den Empfangsbaustein eingekoppelt wird, da bei Zusammenfassung beider Bausteine zu einem einzelnen Baustein die einzelnen Komponenten bereits so angeordnet werden können, daß eine korrekte Referenzimpulseinkopplung sichergestellt ist.

Eine besonders vorteilhafte, geringe Baugröße des erfindungs-gemäßen Entfernungsmessers läßt sich dann erreichen, wenn der Sende- und/oder der Empfangsbaustein ein Volumen kleiner 1 cm³, bevorzugt kleiner 0,5 cm³ und insbesondere ein Volumen von ungefähr 0,2 cm³ besitzt.

Von Vorteil ist es weiterhin, wenn in den Sende-/Empfangsbaustein vor und/oder hinter der Vorrichtung zur Referenzimpulsauskopplung/Referenzimpulseinkopplung zumindest eine Linse, insbesondere eine Kollimatorlinse integriert ist. Bevorzugt ist sowohl im Sende- als auch im Empfangsbaustein sowohl vor als auch hinter der Vorrichtung zur Referenzimpulsauskopplung/Referenzimpulseinkopplung genau eine Kollimatorlinse angeordnet.

Der erfindungsgemäße Sende-/Empfangsbaustein kann ein Gehäuse, insbesondere ein Edelstahlgehäuse aufweisen, in welchem die einzelnen Komponenten des jeweiligen Bausteins gehalten sind. Dieses Gehäuse wird vorzugsweise mit einem Durchbruch zur Referenzimpulsauskopplung/Referenzimpulseinkopplung ausgestattet, so daß ein Referenzimpuls beispielsweise direkt vom Sendebaustein in den Empfangsbaustein eingekoppelt werden kann. Für die Referenzimpulsübertragung wird folglich keine Lichtleitfaser benötigt, wobei es grundsätzlich natürlich auch möglich ist, den Referenzimpuls über eine solche Lichtleitfaser oder auch über Umlenkspiegel zu übertragen.

Die Vorrichtung zur Aus-/Einkopplung des Referenzimpulses wird auf vorteilhafte Weise durch einen im jeweiligen Baustein integrierten Strahlteilerspiegel realisiert. Bevorzugt ist es, wenn dieser Strahlteilerspiegel jeweils eine hohe Transmission aufweist, insbesondere kann die Transmission des Strahlteilerspiegels mehr als 90%, insbesondere mehr als 95% und bevorzugt zwischen 97% und 99% betragen. Eine derart hohe Transmission bedingt auf vorteilhafte Weise einen minimalen Energieverlust beim Aussenden und beim Empfang des zur Entfernungsmessung dienenden Lichtimpulses.

Die Laserdiode des Sendebausteins kann zur Erzeugung von Laserimpulsen mit einer Dauer zwischen 1 und 50 ns, bevorzugt mit einer Dauer von ungefähr 3 ns bei einer Leistung zwischen 1 und 50 W, bevorzugt bei einer Leistung von ungefähr 10 W ausgelegt sein.

Die Photodiode des Empfangsbausteins wird vorzugsweise als Avalanche-Photodiode ausgebildet, welche eine Bandbreite zwischen 20 und 500 MHz, bevorzugt eine Bandbreite von ungefähr 200 MHz aufweist.

Der erfindungsgemäße Entfernungsmesser ist insbesondere dann zu einer besonders genauen Bestimmung der zu messenden Entfernung in der Lage, wenn die verwendete Zeitmeßeinheit zur Ermittlung von Zeiten im ps-Bereich ausgelegt ist.

Eine besonders kostengünstige Version des erfindungsgemäßen Entfernungsmessers läßt sich erreichen, wenn zur Ermittlung der nachfolgend noch beschriebenen Zeitintervalle im Rahmen der Zeitmeßeinheit lediglich zwei separate Zeitmesser eingesetzt werden.

Von Vorteil ist es, wenn der optische Abschwächer im Empfangszweig des Entfernungsmessers zwischen einer Empfangsoptik und dem Empfangsbaustein angeordnet wird. In diesem Fall ist sichergestellt, daß der Entfernungsmesser immer mit voller Sendeleistung arbeiten kann, da im Sendezweig keine Abschwächung erfolgt.

Der optische Abschwächer kann als motorbetriebene Blende, insbesondere als motorbetriebene Kurvenscheibe oder Irisblende ausgebildet werden. Ebenso ist es jedoch möglich, den optischen Abschwächer als mikromechanische Baugruppe auszuführen, wobei hier eine Vielzahl von konkreten Ausführungsformen realisierbar sind.

Eine besonders bevorzugte Ausführungsform einer solchen mikromechanischen Baugruppe liegt dann vor, wenn der optische Abschwächer einen mechanischen, insbesondere einen piezomechanischen Steller zur Verschiebung einer zwischen zwei einander gegenüberliegenden Glasfaser-Enden positionierbaren Blende umfaßt.

Eine weitere bevorzugte Ausführungsform der genannten mikromechanischen Baugruppe besteht in einem optischen Abschwächer, der einen mechanischen, insbesondere einen piezomechanischen Steller zur relativ zueinander erfolgenden Verschiebung von zwei einander gegenüberliegenden Glasfaser-Enden umfaßt.

Ein besonders fehlerfreier Betrieb eines erfindungsgemäßen Entfernungsmessers ist beispielsweise dann möglich, wenn der optische Abschwächer so eingestellt wird, daß Referenz- und Empfangssignal die gleiche Amplitude und/oder die gleiche Impulsbreite aufweisen.

Dabei können die Impulsbreiten von Referenz- und Empfangssignal mittels der Zeitmeßeinheit bestimmt werden, wobei der optische Abschwächer so lange verstellt wird, bis beide Impulsbreiten gleich groß sind.

Für die Regelung der Impulsbreiten bzw. Amplituden von Referenz- und Empfangssignal bieten sich prinzipiell zwei unterschiedliche Verfahren an:

Zum einen ist es möglich, im Rahmen jeder Sendeimpulsaussendung den zeitlichen Abstand von Referenz- und Empfangsimpuls sowie auch die Impulsbreiten von Referenz- und Empfangsimpuls zu bestimmen, wobei im Falle ungleicher Impulsbreiten der optische Abschwächer so lange verstellt wird, bis auf folgenden Sendeimpulsaussendungen gleiche Impulsbreiten festgestellt werden.

Andererseits ist es jedoch auch möglich, die Impulsbreiten von Referenz- und Empfangsimpuls nur bei jeder n-ten Sendeimpulsaussendung zu bestimmen, woraufhin dann bei ungleichen Impulsbreiten der optische Abschwächer zur Erzeugung gleicher Impulsbreiten verstellt wird. In diesem Fall kann n beispielsweise >100, insbesondere ungefähr gleich 1000 sein.

Wenn die Referenz- und Empfangsimpulsbreiten nur bei jeder n-ten Sendeimpulsaussendung bestimmt werden, ist es von Vorteil, daß die Ermittlung des zeitlichen Abstandes von Referenz- und Empfangsimpuls und die Ermittlung der genannten Impulsbreiten unter Verwendung von nur zwei Zeitmessern erfolgen kann, was sich positiv auf die wirtschaftliche Herstellbarkeit des erfindungsgemäßen Entfernungsmessers auswirkt.

Weitere bevorzugte Ausführungsformen der Erfindung sind in den Unteransprüchen angegeben.

Die Erfindung wird nachfolgend anhand von Ausführungsbeispielen unter Bezugnahme auf die Zeichnungen beschrieben; in diesen zeigen:
- Fig. 1: ein Blockschaltbild eines erfindungsgemäßen Entfernungsmessers,
- Fig. 2: die vergrößerte Darstellung eines Sendebausteins,
- Fig. 3: einen möglichen zeitlichen Verlauf von Referenzimpuls und Empfangsimpuls,
- Fig. 4: eine erste mögliche Ausführungsform eines als mikromechanische Baugruppe ausgebildeten optischen Abschwächers, und
- Fig. 5: eine zweite mögliche Ausführungsform eines als mikromechanische Baugruppe ausgebildeten optischen Abschwächers.

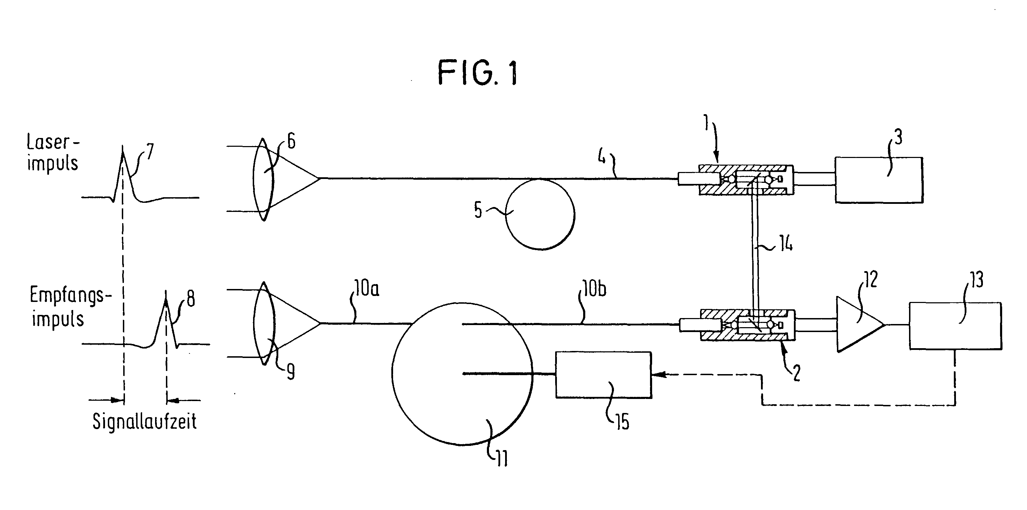

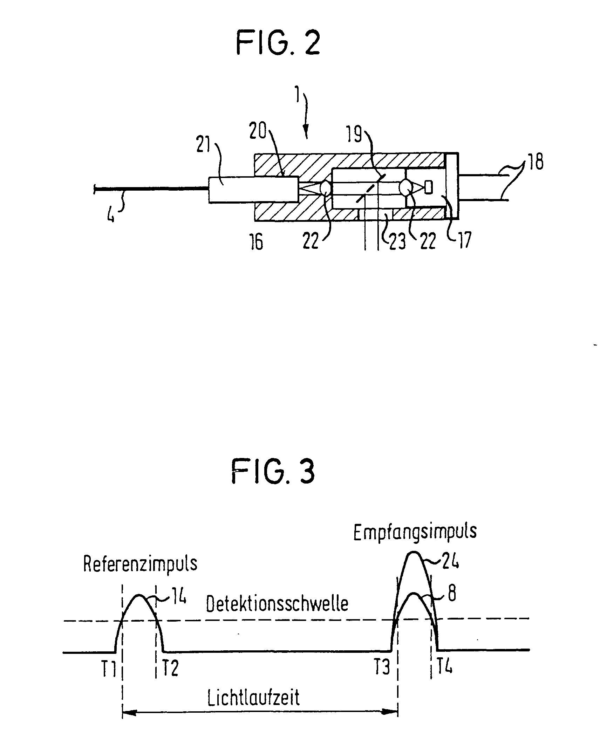

Fig. 1 zeigt ein Blockschaltbild eines erfindungsgemäßen Entfernungsmessers mit einem Sendebaustein 1 und einem Empfangsbaustein 2. Der nähere Aufbau des Sendebausteins 1 wird in Verbindung mit Fig. 2 näher erläutert.

Der Sendebaustein 1 wird von einer Steuerschaltung 3 beaufschlagt, welche insbesondere impulsförmige elektrische Signale zur Verfügung stellt, die im Sendebaustein 1 die Erzeugung von Sendelichtimpulsen bewirken.

Die im Sendebaustein 1 erzeugten Lichtimpulse gelangen über eine Glasfaser 4 zu einer Einheit 5, in welcher eine Verzögerung des Lichtsignals sowie eine Modenmischung erzeugt wird.

Das Ausgangssignal der Einheit 5 gelangt zu einer Sendelinse 6, von der aus ein Sendelichtimpuls 7 in Richtung eines in Fig. 1 nicht dargestellten reflektierenden Objekts gesandt wird.

Dieses Objekt reflektiert den Sendeimpuls 7 als Empfangsimpuls 8 zurück zum Entfernungsmesser, wo der Empfangsimpuls 8 über eine Empfangslinse 9 in eine Lichtleitfaser 10 eingeköppelt wird.

Die Lichtleitfaser 10 ist im Bereich eines optischen Abschwächers 11 unterbrochen. Mittels des Abschwächers 11 kann eingestellt werden, wieviel Licht vom Bereich 10a der Lichtleitfaser in den Bereich 10b der Lichtleitfaser gelangt.

Über den Bereich 10b der Lichtleitfaser gelangt das empfangene Licht zum Empfangsbaustein 2, welcher aus dem empfangenen Licht ein entsprechendes elektrisches Signal erzeugt und dieses an einen Transimpedanzverstärker 12 weiterleitet.

Das Ausgangssignal des Transimpedanzverstärkers 12 ist an eine Zeitmeß- und Auswerteeinheit 13 angelegt, welche in der Lage ist, den zeitlichen Abstand von Impulsen zu berechnen, die der Einheit 13 zugeführt werden. Aus diesen zeitlichen Abständen kann die Zeitmeß- und Auswerteeinheit 13 dann auf die Entfernung zwischen dem Entfernungsmesser und dem reflektierenden Objekt schließen.

Aus dem Sendebaustein 1 wird ein Referenzlichtstrahl 14 ausgekoppelt, welcher direkt, ohne Umlenkung und ohne die Verwendung von Lichtleitfasern in den Empfangsbaustein 2 eingekoppelt wird.

Die Zeitmeß- und Auswerteeinheit 13 beaufschlagt einen Motor 15, welcher zur Ansteuerung des optischen Abschwächers 11 ausgelegt ist.

Eine Ansteuerung des optischen Abschwächers 11 mittels des Motors 15 wird immer dann ausgelöst, wenn die Breite des von der Einheit 13 empfangenen Referenzimpulses 14 nicht mit der Breite des über die Lichtleitfaser 10a, 10b empfangenen Empfangsimpulses übereinstimmt. Der Motor 15 wird dabei von der Einheit 13 so lange beaufschlagt, bis die beiden genannten Breiten übereinstimmen.

Fig. 2 zeigt im Detail den Aufbau des Sendebausteins 1.

In einem im wesentlichen zylindrischen Gehäuse 16 aus Edelstahl ist an einem stirnseitigen Ende eine Laserdiode 17 eingebettet. Die Laserdiode 17 weist auf ihrer dem Gehäuse 16 abgewandten Seite zwei elektrische Anschlußkontakte 18 auf.

Im Gehäuse 16 ist im Bereich der optischen Achse der Laserdiode 17 ein Strahlteilerspiegel 19 in einem Winkel von unge-fähr 45° zur optischen Achse angeordnet. Der Strahlteilerspiegel 19 besitzt - wie bereits beschrieben - einen sehr hohen Transmissionsgrad, so daß entlang der optischen Achse der Laserdiode 17 verlaufendes Licht weitgehend ungehindert durch den Strahlteilerspiegel 19 hindurchtreten kann.

Auf der der Laserdiode 17 abgewandten Seite des Strahlteilerspiegels 19 ist eine Aufnahme 20 für einen Fasersteckanschluß 21 vorgesehen, welcher das von der Laserdiode 17 erzeugte Licht in eine Lichtleitfaser 4 einkoppelt.

Zwischen Strahlteilerspiegel 19 und Fasersteckanschluß 21 sowie zwischen Strahlteilerspiegel 19 und Photodiode 17 ist jeweils eine Kollimatorlinse 22 vorgesehen.

Im Bereich des Strahlteilerspiegels 19 ist das Gehäuse 16 mit einem Durchbruch 23 versehen, über den ein geringer Teil des von der Laserdiode 17 ausgesandten Lichts als Referenzimpuls ausgekoppelt wird. Der Durchbruch 23 erstreckt sich dabei senkrecht zur optischen Achse der Laserdiode 17.

Laserdiode 17, Strahlteilerspiegel 19 und Kollimatorlinsen 22 sind fest mit dem Gehäuse 16 verbunden, während der Fasersteckanschluß 21 lösbar mit dem Gehäuse 16 verbunden ist.

Der Empfangsbaustein 2 ist ähnlich aufgebaut wie der in Fig.2 dargestellte Sendebaustein 1. Ein Unterschied besteht lediglich darin, daß anstelle der Laserdiode 17 eine entsprechend gestaltete Photodiode eingesetzt ist, der Strahlteilerspiegel 19 um 90° versetzt zu der in Fig. 2 dargestellten Position angeordnet ist (siehe Fig. 1) und der Durchbruch 23 nicht wie in Fig. 2 dargestellt unterhalb des Strahlteilerspiegels 19, sondern oberhalb des Strahlteilerspiegels 19 vorgesehen ist, wie dies auch aus Fig. 1 zu ersehen ist.

Fig. 3 zeigt schematisch diejenigen Impulse, die von der Zeitmeß- und Auswerteeinheit 13 gemäß Fig. 1 empfangen werden.

Zuerst wird der Referenzimpuls 14 (Fig. 1) empfangen, welcher zum Zeitpunkt T1 eine vorgegebene Detektionsschwelle überschreitet und zum Zeitpunkt T2 diese Detektionsschwelle wiederum unterschreitet.

Zeitlich versetzt um die Lichtlaufzeit, die der ausgesendete Laserimpuls 7 (Fig. 1) vom Entfernungsmesser zum reflektierenden Objekt und wieder zurück benötigt, empfängt die Einheit 13 dann den Empfangsimpuls 8 (Fig. 1), welcher zum Zeitpunkt T3 die genannte Detektionsschwelle überschreitet und zum Zeitpunkt T4 diese Detektionsschwelle wiederum unterschreitet.

Die Lichtlaufzeit entspricht somit der Zeitdifferenz T3-T1.

Falls der Empfangsimpuls 8 eine zu hohe Amplitude bzw. eine zu große Breite aufweist, wie dies in Fig. 3 durch den Impuls 24 veranschaulicht ist, wird über die Zeitmeß- und Auswerteeinheit 13 der Motor 15 in Gang gesetzt und der optische Abschwächer 11 derart eingestellt, daß der Empfangsimpuls 24 so stark gedämpft wird, daß er die gleiche Amplitude bzw. die gleiche Breite wie der Referenzimpuls 14 aufweist.

Diese Regelung der Amplitude des Empfangsimpulses wird bevorzugt dadurch bewerkstelligt, daß nicht die Amplituden der empfangenen Impulse, sondern deren Breiten gemessen werden. Die Breite des Referenzimpulses entspricht dabei der Differenz T2-T1, während die Breite des Empfangsimpulses der Differenz T4-T3 entspricht. Der optische Abschwächer muß folglich lediglich derart eingestellt werden, daß die beiden Differenzen T2-T1 und T3-T4 gleich groß sind.

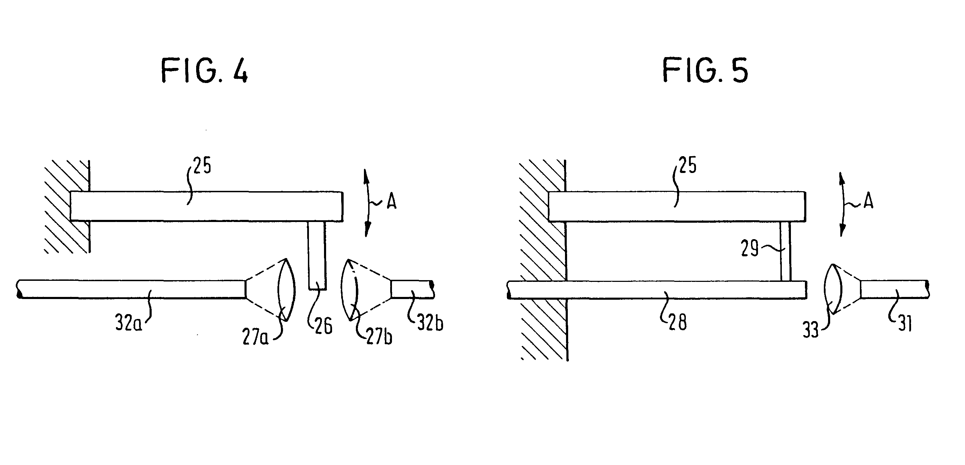

Die Fig. 4 und 5 zeigen zwei Ausführungsformen von als mikromechanische Baugruppe ausgebildeten optischen Abschwächern.

Fig. 4 zeigt einen piezomechanischen Steller 25, welcher an seinem einen Ende fest gelagert und durch Beaufschlagung mit einer Spannung in Richtung des Pfeiles A verbiegbar ist.

Am freien Ende des piezomechanischen Stellers 25 ist eine nach unten ragende Blende 26 vorgesehen, welche sich zwischen zwei einander gegenüberliegenden Linsen 27a, 27b erstreckt. Die Linsen 27a, 27b sind jeweils benachbart und beabstandet zu den Enden von zwei Glasfasern 32a, 32b angeordnet und vergrößern den optisch wirksamen Bereich der einander zugewandten stirnseitigen Enden der beiden Glasfasern 32a, 32b. Die beiden Linsen 27a, 27b sowie die beiden Glasfasern 32a, 32b sind fest und unbeweglich gelagert.

Durch eine Verbiegung des piezomechanischen Stellers 25 kann die Blende 26 aus dem zwischen den beiden Linsen 27a, 27b liegenden Bereich herausgezogen oder weiter in diesen hineinbewegt werden. Auf diese Weise läßt sich wahlweise eine Abschwächung des Lichtes, welches von einer Faser 32a zur anderen Faser 32b übertragen wird, erreichen.

Anstelle der Blende 26 könnte auch ein horizontal ausgerichteter Glasfaserabschnitt verwendet werden, welcher zwischen beiden Linsen 27a, 27b oder zwischen den beiden Enden der Glasfasern 32a, 32b mittels des Stellers 25 in vertikaler Richtung auf- und abbewegbar ist.

Eine alternative Ausführungsform eines optischen Abschwächers ist in Fig. 5 dargestellt.

Auch hier ist ein piezomechanischer Steller 25 vorhanden, welcher an seinem einen Ende fest gelagert ist.

Ebenfalls mit einem Ende fest gelagert ist eine Glasfaser 28, welche sich im wesentlichen parallel zum piezomechanischen Steller 25 erstreckt. Die Glasfaser 28 sowie der piezomechanische Steller 25 sind im Bereich ihrer freien Enden durch ein geeignetes Mittel 29 miteinander verbunden.

Durch Spannungsbeaufschlagung kann der piezomechanische Steller 25 entlang des Pfeiles A verbogen werden.

Gegenüber dem freien Ende der Glasfaser 28 befindet sich eine weitere Glasfaser 31, welche fest und unbeweglich gelagert ist. Benachbart und beabstandet zum stirnseitigen Ende der Glasfaser 31 ist eine Linse 33 vorgesehen, welche den optisch wirksamen Bereich des stirnseitigen Endes der Glasfaser 31 vergrößert.

Durch eine Verbiegung des piezomechanischen Stellers 25 kann erreicht werden, daß sich das freie Ende der Glasfaser 28 aus dem Bereich der Linse 33 herausbewegt, wodurch die von der Glasfaser 28 in die Glasfaser 31 übertragene Lichtmenge wahlweise reduziert werden kann.

Die Aufweitung des wirksamen Bereichs des stirnseitigen Endes der Glasfaser 31 durch die Linse 33 ist sinnvoll, um Justierarbeiten bei Montage des optischen Abschwächers mit geringem Aufwand durchführen zu können. Anstelle der Linse 33 könnte ebenso eine Glasfaser verwendet werden, welche einen größeren Querschnitt besitzt als die Glasfaser 28. Auch hierdurch würde sich der Justieraufwand reduzieren lassen.

## Patentansprüche

1. Entfernungsmesser, insbesondere einstrahliger Pulslaser-Entfernungsmesser mit einem Lichtsender (1), einem Lichtempfänger (2), einem im Sende- oder Empfangszweig gelegenen optischen Abschwächer (11) und einer Zeitmeßeinheit (13) zur Ermittlung der Lichtlaufzeit zwischen Aussendung und Empfang eines Lichtsignals,
**dadurch gekennzeichnet,**
**daß** der Lichtsender als einheitlicher und kompakter Baustein (1) ausgebildet ist, in welchen eine Laserdiode (17), Anschlußelemente (18) für die Laserdiode (17), eine Vorrichtung zur Referenzimpulsauskopplung (19) sowie ein Fasersteckanschluß (20, 21) zur Einkopplung des ausgesandten Lichts in eine Lichtleitfaser (4) integriert sind, daß der Lichtempfänger ebenfalls als einheitlicher und kompakter Baustein (2) ausgebildet ist, in welchen eine Photodiode, Anschlußelemente für die Photodiode, eine Vorrichtung zur Referenzimpulseinkopplung sowie ein Fasersteckanschluß zur über eine Lichtleitfaser (10b) erfolgenden Einkopplung von Empfangslicht integriert sind, und daß der Lichtsender-Baustein (1) und der Lichtempfänger Baustein (2) zur direkten, ohne Umlenkung und ohne die Verwendung von Lichtleit Fasernerfolgenden Referenzimpulseinkopplung in den Lichtempfänger - Baustein (2) ausgebildet sind.

2. Entfernungsmesser nach Anspruch 1, **dadurch gekennzeichnet, daß** der Sende-/ Empfangsbaustein (1, 2) ein Gehäuse (16), insbesondere ein Edelstahlgehäuse aufweist, in welchem die einzelnen Komponenten (17, 19, 21, 22) des Bausteins (1, 2) gehalten sind, wobei insbesondere das Gehäuse (16) einen Durchbruch (23) zur Referenzimpulsauskopplung/Referenzimpulseinkopplung aufweist.

3. Entfernungsmesser nach Anspruch 1 oder 2, **dadurch gekennzeichnet, daß** der Sende- und/oder der Empfangsbaustein (1, 2) ein Volumen kleiner 1 cm³, bevorzugt kleiner 0,5 cm³ und insbesondere ein Volumen von ungefähr 0,2 cm³ besitzt.

4. Entfernungsmesser nach einem der vorhergehenden Ansprüche, **dadurch gekennzeichnet, daß** in den Sende-/ Empfangsbaustein (1,2) vor und/oder hinter der Vorrichtung (19) zur Referenzimpulsauskopplung/Referenzimpulseinkopplung zumindest eine Linse (22), insbesondere eine Kollimatorlinse integriert ist.

5. Entfernungsmesser nach einem der vorhergehenden Ansprüche, **dadurch gekennzeichnet, daß** die Vorrichtung zur Aus-/Einkopplung des Referenzimpulses durch einen im jeweiligen Baustein integrierten Strahlteilerspiegel (19) realisiert ist, wobei insbesondere die Transmission des Spiegels (19) mehr als 90%, insbesondere mehr als 95% und bevorzugt zwischen 97% und 99% beträgt.

6. Entfernungsmesser nach einem der vorhergehenden Ansprüche, **dadurch gekennzeichnet, daß** die Laserdiode (17) des Sendebausteins (1) zur Erzeugung von Laserimpulsen mit einer Dauer zwischen 1 und 50 ns, bevorzugt mit einer Dauer von ungefähr 3 ns bei einer Leistung zwischen 1 und 50 W, bevorzugt bei einer Leistung von ungefähr 10 W ausgelegt ist.

7. Entfernungsmesser nach einem der vorhergehenden Ansprüche, **dadurch gekennzeichnet, daß** die Photodiode des Empfangsbausteins (2) als Avalanche-Photodiode mit einer Bandbreite zwischen 20 und 500 MHz, bevorzugt mit einer Bandbreite von ungefähr 200 MHz ausgelegt ist, und/oder daß die Zeitmeßeinheit (13) zur Ermittlung von Zeiten im ps-Bereich ausgelegt ist.

8. Entfernungsmesser nach einem der vorhergehenden Ansprüche, **dadurch gekennzeichnet, daß** die Zeitmeßeinheit genau zwei Zeitmesser umfaßt, und/oder daß der optische Abschwächer (11) im Empfangszweig zwischen einer Empfangsoptik (9) und dem Empfangsbaustein (2) angeordnet ist.

9. Entfernungsmesser nach einem der vorhergehenden Ansprüche, **dadurch gekennzeichnet, daß** der optische Abschwächer (11) als motorbetriebene Blende, insbesondere als motorbetriebene Kurvenscheibe oder Irisblende ausgebildet ist.

10. Entfernungsmesser nach einem der Ansprüche 1 bis 8,
**dadurch gekennzeichnet, daß** der optische Abschwächer (11) als mikromechanische Baugruppe ausgeführt ist, wobei insbesondere der optische Abschwächer (11) einen mechanischen, insbesondere einen piezomechanischen Steller (25) zur Verschiebung einer zwischen zwei einander gegenüberliegenden Glasfaser-Enden (27) positionierbaren Blende (26) umfaßt oder der optische Abschwächer (11) einen mechanischen, insbesondere einen piezomechanischen Steller (25) zur relativ zueinander erfolgenden Verschiebung von zwei einander gegenüberliegenden Glasfaser-Enden (28, 30) umfaßt.

11. Verfahren zum Betrieb eines Entfernungsmessers nach einem der vorhergehenden Ansprüche,
**dadurch gekennzeichnet,**
**daß** der optische Abschwächer (11) so eingestellt wird, daß Referenz- und Empfangssignal die gleiche Amplitude und/oder Impulsbreite aufweisen.

12. Verfahren nach Anspruch 11, **dadurch gekennzeichnet, daß** die Impulsbreiten von Referenz- und Empfangssignal mittels der Zeitmeßeinheit (13) bestimmt werden und der optische Abschwächer (11) so lange verstellt wird, bis beide Impulsbreiten gleich sind, wobei insbesondere im Rahmen jeder Sendeimpulsaussendung der zeitliche Abstand von Referenz- und Empfangsimpuls sowie die Impulsbreiten von Referenz- und Empfangsimpuls bestimmt und gegebenenfalls der optische Abschwächer (11) zur Erzeugung gleicher Impulsbreiten verstellt wird, oder die Impulsbreiten von Referenz- und Empfangsimpuls nur bei jeder n-ten Sendeimpulsaussendung bestimmt werden, woraufhin bei ungleichen Impulsbreiten der optische Abschwächer (11) zur Erzeugung gleicher Impulsbreiten verstellt wird.

13. Verfahren nach Anspruch 12, **dadurch gekennzeichnet, daß** gilt n>100, insbesondere n ungefähr gleich 1000, und/oder daß die Ermittlung des zeitlichen Abstandes von Referenz- und Empfangsimpuls und die Ermittlung der Impulsbreiten unter Verwendung von nur zwei Zeitmessern erfolgt.

## Claims

1. Range measurement apparatus, in particular a single beam pulsed laser range finder, comprising a light transmitter (1), a light receiver (2), an optical attenuator (11) disposed in the transmission or reception branch and a time measuring unit (13) for determining the light transit time between the transmission and the receipt of a light signal, **characterised in that** the light transmitter is formed as a unitary and compact module (1) into which a laser diode (17), connection elements (18) for the laser diode (17), an apparatus (19) for coupling out the reference pulse, and also a fibre plug connector (20, 21) for the coupling of the transmitted light into a light conducting fibre (4) are integrated; **in that** the light receiver is likewise formed as a unitary and compact module (2) into which a photodiode, connection elements for the photodiode, an apparatus for coupling in the reference pulse and also a fibre plug connector for the coupling in of the received light which takes place via a light conducting fibre (10b) are integrated and **in that** the light transmitter module (1) and the light receiver module (2) are formed for the coupling of the reference pulse into the light receiver module (2), which takes place directly, without deflection and without the use of light conducting fibres.

2. Range measurement apparatus in accordance with claim 1, **characterised in that** the transmitter module/receiver module (1, 2) has a housing (16), in particular a stainless steel housing in which the individual components (17, 19, 21, 22) of the module (1, 2) are held, with the housing (16) in particular having an aperture (23) for the coupling out/coupling in of the reference pulse.

3. Range measurement apparatus in accordance with claim 1 or claim 2, **characterised in that** the transmitter and/or the receiver module (1, 2) have a volume smaller than 1 cm³, preferably smaller than 0.5 cm³, and in particular a volume of approximately 0.2 cm³

4. Range measurement apparatus in accordance with any one of the preceding claims, **characterised in that** at least one lens (22), in particular a collimator lens, is integrated into the transmitter module/receiver module (1, 2) in front of and/or behind the apparatus (19) for the coupling out/coupling in of the reference pulse.

5. Range measurement apparatus in accordance with any one of the preceding claims, **characterised in that** the apparatus for the coupling out/coupling in of the reference pulse is realised by a beam splitter mirror (19) integrated into the respective module, with the transmission of the mirror (19) in particular amounting to more than 90 %, in particular to more than 95 %, and preferably to between 97 % and 99 %.

6. Range measurement apparatus in accordance with any one of the preceding claims, **characterised in that** the laser diode (17) of the transmitter module (1) is designed for the production of laser pulses with a duration between 1 and 50 ns, preferably with a duration of approximately 3 ns at a power between 1 and 50 W, preferably at a power of approximately 10 W.

7. Range measurement apparatus in accordance with any one of the preceding claims, **characterised in that** the photodiode of the receiver module (2) is designed as an avalanche photodiode with a bandwidth between 20 and 500 MHz, preferably with a bandwidth of approximately 200 MHz; and/or **in that** the time measurement unit (13) is designed to determine times in the ps range.

8. Range measurement apparatus in accordance with any one of the preceding claims, **characterised in that** the time measurement unit includes precisely two time measurement devices; and/or **in that** the optical attenuator (11) is arranged in the reception branch between an optical receiving system (9) and the receiver module (2).

9. Range measurement apparatus in accordance with any one of the preceding claims, **characterised in that** the optical attenuator (11) is formed as a motor-driven diaphragm, in particular as a motor-driven cam disc or iris diaphragm.

10. Range measurement apparatus in accordance with any one of claims 1 to 8, **characterised in that** the optical attenuator (11) is designed as a micro-mechanical component group, with in particular the optical attenuator (11) including a mechanical setting device (25), in particular a piezo-mechanical setting device, for shifting a diaphragm (26) which can be positioned between two oppositely disposed glass fibre ends (27); or **in that** the optical attenuator (11) includes a mechanical setting device (25), in particular a piezo-mechanical setting device for shifting two oppositely disposed glass fibre ends (28, 30) relative to one another.

11. Method for the operation of a range measurement apparatus in accordance with any one of the preceding claims, **characterised in that** the optical attenuator (11) is so set that the reference signal and the received signal have the same amplitude and/or the same pulse width.

12. Method in accordance with claim 1, **characterised in that** the pulse widths of the reference signal and of the received signal are determined by means of the time measurement unit (13) and the optical attenuator (11) is adjusted until both pulse widths are the same, with in particular, in the context of each pulse transmission of the transmitter, the time spacing of the reference pulse and of the received pulse and also the pulse widths of the reference pulse and of the received pulse being determined, and optionally the optical attenuator (11) being adjusted to produce the same pulse width, or with the pulse widths of the reference pulse and the received pulse only being determined for every nth pulse transmission of the transmitter, whereupon, with dissimilar pulse widths, the optical attenuator (11) is adjusted to produce the same pulse widths.

13. Method in accordance with claim 12, **characterised in that** n>100 applies, in particular that n is approximately equal to 1000; and/or **in that** the determination of the time spacing of the reference pulse and the received pulse and the determination of the pulse widths takes place using only two time measurement devices.

## Revendications

1. Télémètre, en particulier télémètre à laser pulsé à faisceau unique comportant un émetteur de lumière (1), un récepteur de lumière (2), un affaiblisseur optique (11) situé dans la branche d'émission ou dans la branche de réception, et une unité de mesure de temps (13) pour détecter la durée de parcours de la lumière entre l'émission et la réception d'un signal lumineux, **caractérisé en ce que** l'émetteur de lumière est réalisé sous forme de module (1) unitaire et compact dans lequel sont intégrés une diode laser (17), des éléments de raccordement (18) pour la diode laser (17), un dispositif pour le découplage d'impulsions de référence (19) ainsi qu'un raccord à fibre enfichable (20, 21) pour le couplage dans une fibre optique (4) de la lumière émise, **en ce que** le récepteur de lumière est également réalisé sous forme de module (2) unitaire et compact dans lequel sont intégrés une photodiode, des éléments de raccordement pour la photodiode, un dispositif pour le couplage d'impulsions de référence ainsi qu'un raccord à fibre enfichable pour le couplage de la lumière reçue via une fibre optique (10b), et **en ce que** le module émetteur de lumière (1) et le module récepteur de lumière (2) sont prévus pour le couplage d'impulsions de référence dans le module récepteur de lumière (2), qui s'effectue directement sans renvoi ni utilisation de fibres optiques.

2. Télémètre selon la revendication 1, **caractérisé en ce que** le module émetteur/récepteur (1, 2) comprend un boîtier (16), en particulier un boîtier en acier spécial dans lequel sont retenus les composants individuels (17, 19, 21, 22) du module (1, 2), le boîtier (16) présentant en particulier une traversée (23) pour le découplage/couplage d'impulsions de référence.

3. Télémètre selon l'une ou l'autre des revendications 1 et 2, **caractérisé en ce que** le module émetteur et/ou récepteur (1, 2) possède un volume inférieur à 1 cm³, de préférence inférieur à 0,5 cm³, et en particulier un volume d'environ 0,2 cm³.

4. Télémètre selon l'une quelconque des revendications précédentes, **caractérisé en ce que** dans le module émetteur/récepteur (1, 2) est intégrée au moins une lentille (22), en particulier une lentille de collimateur, en avant et/ou en arrière du dispositif (19) pour le découplage/couplage d'impulsions de référence.

5. Télémètre selon l'une quelconque des revendications précédentes, **caractérisé en ce que** le dispositif pour découpler/coupler les impulsions de référence est réalisé par un miroir (19) diviseur de faisceau intégré dans le module respectif, la transmission du miroir (19) étant supérieure à 90 %, en particulier supérieure à 95 % et de préférence comprise entre 97 % et 99 %.

6. Télémètre selon l'une quelconque des revendications précédentes, **caractérisé en ce que** la diode laser (17) du module émetteur (1) est conçue pour émettre des impulsions laser d'une durée entre 1 et 50 ns, de préférence d'une durée d'environ 3 ns sous une puissance entre 1 et 50 W, de préférence sous une puissance d'environ 10 W.

7. Télémètre selon l'une quelconque des revendications précédentes, **caractérisé en ce que** la photodiode du module récepteur (2) est conçue sous forme de photodiode à avalanche d'une largeur de bande entre 20 et 500 MHz, de préférence d'une largeur de bande d'environ 200 MHz, et/ou **en ce que** l'unité de mesure de temps (13) est conçue pour détecter des durées dans la plage des picosecondes.

8. Télémètre selon l'une quelconque des revendications précédentes, **caractérisé en ce que** l'unité de mesure de temps comprend exactement deux éléments de mesure de temps, et/ou **en ce que** l'affaiblisseur optique (11) est agencé dans la branche de réception entre une optique de réception (9) et le module récepteur (2).

9. Télémètre selon l'une quelconque des revendications précédentes, **caractérisé en ce que** l'affaiblisseur optique (11) est réalisé sous forme de diaphragme motorisé, en particulier sous forme de disque à came motorisé ou diaphragme à iris motorisé.

10. Télémètre selon l'une quelconque des revendications 1 à 8, **caractérisé en ce que** l'affaiblisseur optique (11) est réalisé sous forme de groupe structurel micromécanique, l'affaiblisseur optique (11) comprenant en particulier un vérin mécanique (25), en particulier piézomécanique, pour déplacer un diaphragme (26) susceptible d'être positionné entre deux extrémités de fibres de verre (27) en regard l'une de l'autre, ou **en ce que** l'affaiblisseur optique (11) comprend un vérin mécanique (25), en particulier piézomécanique, pour le déplacement l'une par rapport à l'autre de deux extrémités de fibres de verre (28, 30) en regard l'une de l'autre.

11. Procédé pour exploiter un télémètre selon l'une quelconque des revendications précédentes, **caractérisé en ce que** l'on règle l'affaiblisseur optique (11) de telle sorte que le signal de référence et le signal de réception présentent la même amplitude et/ou la même largeur d'impulsion.

12. Procédé selon la revendication 11, **caractérisé en ce que** l'on détermine les largeurs d'impulsion du signal de référence et du signal de réception au moyen de l'unité de mesure de temps (13), et **en ce que** l'on règle l'affaiblisseur optique (11) aussi longtemps que les deux largeurs d'impulsion deviennent égales, l'écart temporel de l'impulsion de référence et de l'impulsion de réception ainsi que les largeurs de l'impulsion de référence et de l'impulsion de réception étant déterminés en particulier dans le cadre de chaque émission d'une impulsion, et le cas échéant on règle l'affaiblisseur optique (11) pour atteindre des largeurs d'impulsions égales, ou bien on détermine les largeurs de l'impulsion de référence et de l'impulsion de réception uniquement à chaque n^{ième} émission d'impulsion, suite à quoi, en cas de largeurs d'impulsion inégales, on règle l'affaiblisseur optique (11) pour générer des largeurs d'impulsions égales.

13. Procédé selon la revendication 12, **caractérisé en ce que** n > 100, en particulier n approximativement égal à 1000, et/ou **en ce que** la détection de l'écart temporel de l'impulsion de référence et de l'impulsion de réception et la détection des largeurs d'impulsions s'effectue en utilisant seulement deux éléments de mesure de temps.
